# EUROPEAN PATENT SPECIFICATION

(11) **EP 0 485 273 B1**
(45) Date of publication and mention of the grant of the patent: **11.09.1996**
(21) Application number: 91402957.4
(22) Date of filing: 05.11.1991
(51) Int. Cl.: B60L 5/19

(54) **Pantograph unmovable with respect to bogie frame**
Fester Scherenstromabnehmer im Verhältnis zu einem Drehgestellrahmen
Pantographe fixe par rapport au cadre d'un chassis de bogie

(30) Priority: 07.11.1990 JP 299743/90
(43) Date of publication of application: 13.05.1992
(73) Proprietor: RAILWAY TECHNICAL RESEARCH INSTITUTE, Kokubunji-shi Tokyo (JP)
(72) Inventor: Okamoto, Isao, Higashimurayama-shi, Tokyo (JP); Shimomura, Takayuki, Kokubunji-shi, Tokyo (JP); Enomoto, Mamoru, Kokubunji-shi, Tokyo (JP); Fujita, Toyoshi, Hachioji-shi, Tokyo (JP)
(74) Representative: Fort, Jacques

(56) References cited:
- DE-C- 751 755
- US-A- 1 828 945

## Description

The present invention relates to pantographs of rolling stocks, and more precisely relates to pantographs supported unmovably with respect to the bogie frame, in other words, supported movable with respect to the car body while keeping the relative position of the pantographs unchanged with respect to the bogie frame. Movable pantographs are advantageous especially in rolling stocks having systems to naturally or actively tilt the car bodies of the train.

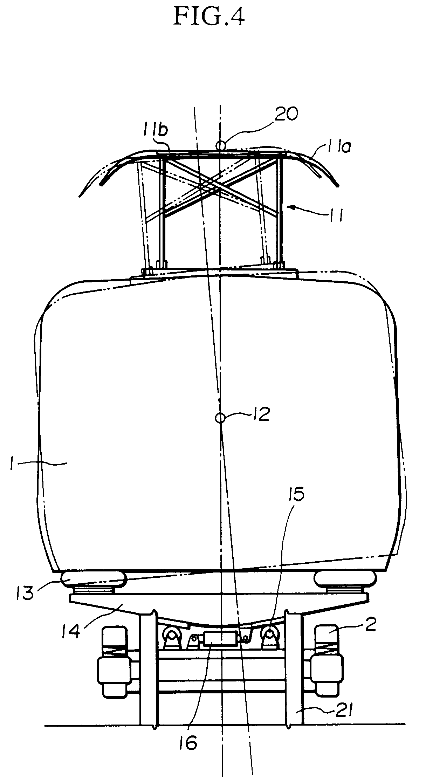

Various schemes have been proposed to tilt the car bodies of a rolling stock as the train passes on a curved track at high speed. When the car bodies are tilted inward, the passengers feel less steady horizontal acceleration and the riding comfort is improved. Figures 4 shows a rolling stock having a system for actively tilting a car body 1. In Figure 4, the car body 1 is supported by air springs 13 which are supported by a pendulum beam 14. The pendulum beam 14 is supported by a pair of rollers 15 so as to permit swing motion of the pendulum beam 14 in a direction transverse to the longitudinal axis of the car body 1. The rollers 15 are supported on a bogie frame 2 which is on axles 21.In case of an active tilt system, an actuator 16 is provided on the bogie frame 2; and tilt angle of the pendulum beam 14, and therefore the car body 1, is controlled by virtue of the actuator 16.

When the actuator 16 is activated, the car body 1 tilts along the dotted line shown in Figure 4, for example, by virtue of the swinging motion of the pendulum beam 14. The center of rotation 12 is somewhere on the vertical central axis of symmetry of the car body 1. A pantograph 11 on top of the car body 1 is rotated about the center of rotation 12 as the pendulum beam 14 swings, as shown in Figure 4.

When the car body 1 is tilted the relative displacement between the pan-bow 11a of the pantograph and the contact wire 20 increases as the tilting angle of the car body 1 increases. The tilting angle of the car body 1 is therefore limited since the displacement of the pan-bow 11a relative to the contact wire 20 must be less than the length of collecting strips 11b; if the relative displacement exceeds the collecting strips length, the collecting strips 11b of the pan-bow 11a and the contact wire 20 will lose electrical contact. Therefore, since the degree of tilting angle of the car body is limited by the necessity of maintaining contact between the collecting strips 11b of the pan-bow 11a and the contact wire 20, and on the other hand, since the degree of tilting angle of the car body 1 necessary for riding comfort may be large, the improvement in the riding comfort in such a car body 1 is limited.

In addition to above, there is a demand to lower the center of rotation 12 of the car body 1 in order to minimize a lateral movement of the car body gravity center and in order to improve the riding comfort. However, lowering the center of rotation 12 increases the relative displacement between the collecting strip 11b of the pan-bow 11a and the contact wire 20.

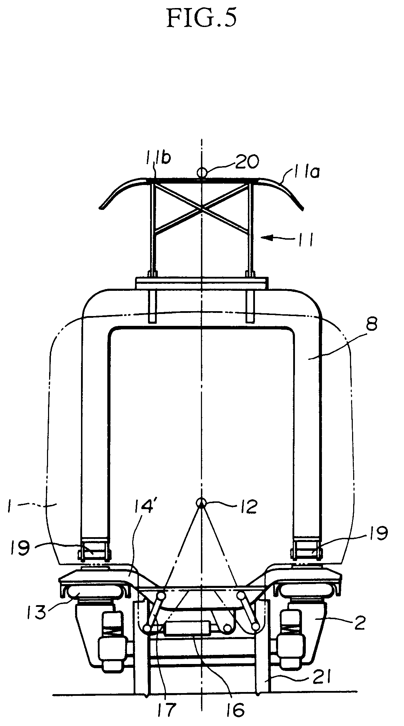

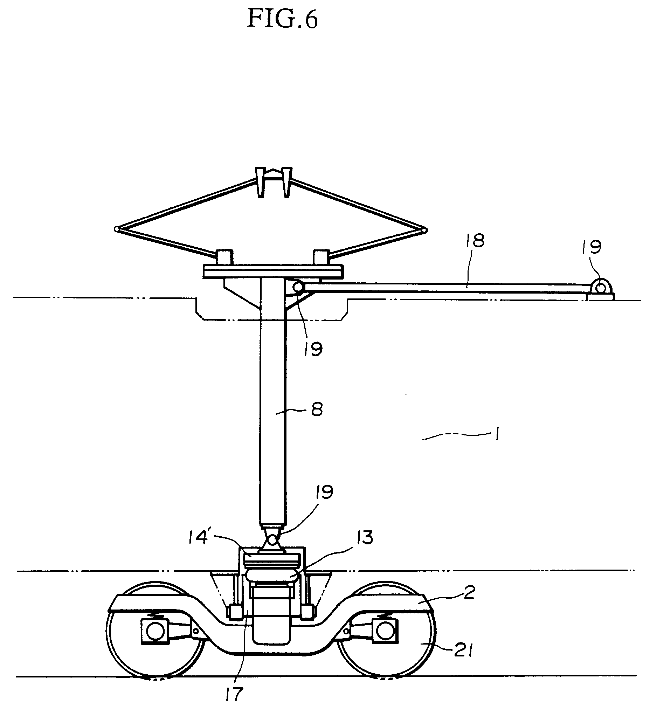

A solution for the problem described above, according to a conventional technology, is to support the pantograph 11 from the bogie frame 2, independently of the car body 1, by a support frame 8 and a bolster 14′, as shown in Figures 5 and 6. The bolster 14′ is fixedly supported by the bogie frame 2. Since in this case the bolster 14′ does not swing, the relative displacement between the collecting strips 11b and the contact wire 20 will be negligibly small as the car body 1 tilts by virtue of the system for intentionally tilting.

However, a major problem with this solution is that the support frame 8 obstacles the passengers space in the car body 1 since the support frame 8 protrudes into the car body 1. Another problem is that the relative displacement between the support frame 8 and the car body 1 requires a dead space between the support frame 8 and the car body 1. Further problem is that a massive frame 8 is necessary.

Another prior art pantograph unmovable with respect to a bogie frame for a rolling stock (US-A-1 828 945) is supported by the rolling stock so as to be movable in a plane perpendicular to the axis of motion of the rolling stock, so that the collecting strips of the pantograph can keep contact with a contact wire even when the car body is tilted.

It is an object of the present invention to provide a pantograph for a rolling stock, which permits a large tilting angle of the car body without limiting the passenger space.

For that purpose there is provided a pantograph for a rolling stock according to claim 1.

Other features of the present invention are defined in the dependent claims and described in the following description of preferred embodiments.

Figure 1 is a sectional view of a pantograph according to the present invention provided to a car body having a system for tilting the car body.

Figure 2 is a plan view of a pantograph unmovable with respect to the bogie frame according to the present invention.

Figure 3 is a perspective view of a pantograph according to the present invention.

Figure 4 is a sectional view showing a car body having a system for tilting the car body, and a pantograph fixed on the car body.

Figure 5 is a sectional view showing a pantograph supported from the bogie frame so as to reduce the relative displacement between the pantograph and the contact wire.

Figure 6 is a sectional view along the longitudinal axis of the train, showing the pantograph and the support mechanism as shown in Figure 5.

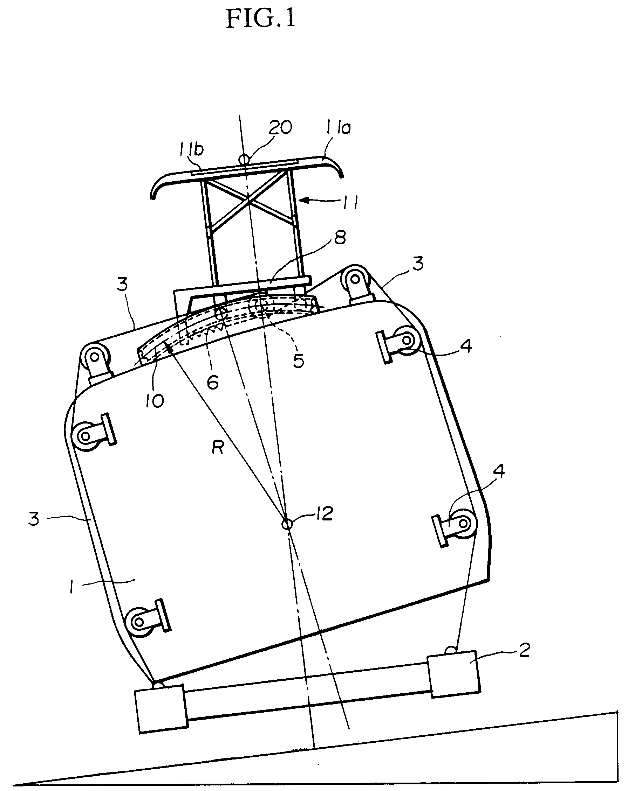

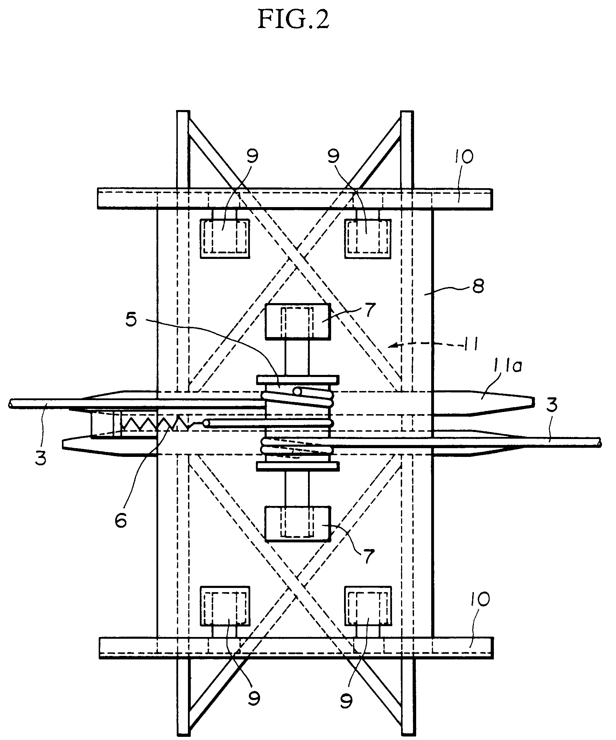

With reference to Figures 1, 2 and 3, a preferred embodiment of the present invention will be described in detail.

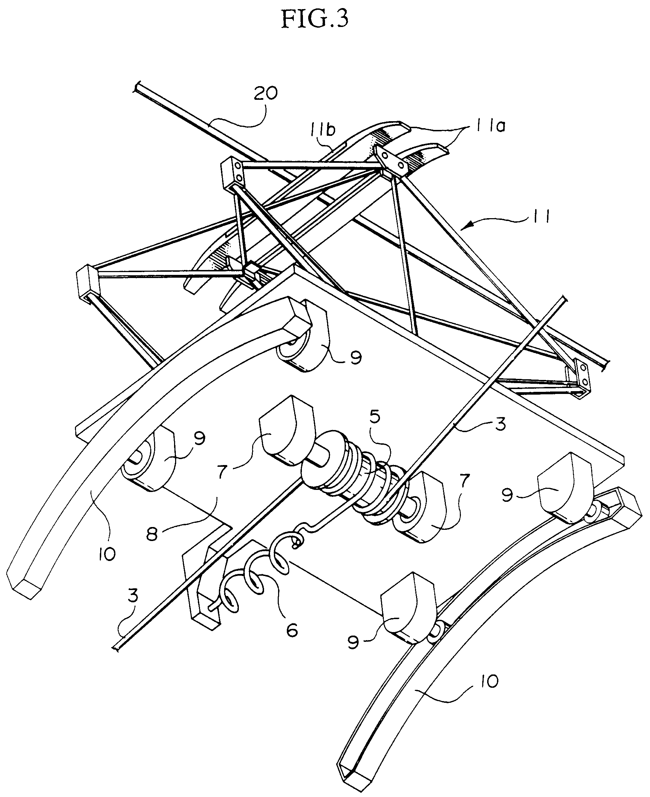

In Figure 1 and 3, a pantograph 11 is provided on a pantograph support 8. Each pantograph support frame 8 has a sliding mechanism which moves the pantograph support frame 8 in a plane perpendicular to the axis of motion of the rolling stock; this movable mechanism includes a slide bearing guide 10 provided on the roof of car body 1, and a slide bearing block 9 which smoothly moves along the sliding guide 10. The shape of the sliding guide 10 is not straight; instead, it is arc-shaped and has a radius R (shown in Figure 1) which coincides with the distance from the center of rotation of the car body 1, so that the relative displacement between an collecting strips 11b and an contact wire 20 is smaller. A drum 5 winding two cables 3 is provided on the underside of the pantograph support frame 8, and is supported by a drum support bearing 7. The two cables 3 are provided through the car body 1, from a bogie frame 2 which is not involved in tilting the car body 1. It is possible to use chains or belts in place of the cables 3. The pulleys 4 or the guide casing are provided along the car body 1 so as to guide the cables 3.

As shown in Figure 1, the pantograph support frame 8 can smoothly move in the direction perpendicular to the direction of motion of the rolling stock by means of the sliding guide 10 and the slide bearing block 9. One end of a tension spring 6 is fixed on the pantograph support frame 8, the other end is fixed to the winding drum 5, so as to tense the cables 3.

The apparatus for tilting the car body is omitted in Figures 1, 2 and 3.

In the following, the operation of the pantograph is described.

As shown in Figure 1, when the car body 1 is tilted by virtue of the apparatus for tilting a car body, the pantograph 11 remains unmovable with respect to the bogie frame 2 while the car body is rotated around the center of rotation 12. It is because the cables 3 keep the location of the pantograph support frame 8 unchanged with respect to the bogie frame 2. The tension spring 6 provides approximately constant tension to the cables 3 while permitting a temporary release and traction of the cables 3 in response to fluctuating external forces exerted on the cables 3, so as to prevent an excessive force from being applied to the cables 3.

When the tilting car body 1 returns to an upright position, the pantograph support frame 8 is pulled in the direction opposite to the side of tilting, by means of the cable 3 on the opposite side of the car body 1.

The pantograph support apparatus for a rolling stock of the present invention as thus described provides the following advantages:

The pantograph 11 is maintained in a position right above the axle. Therefore, the displacement between the pantograph and the contact wire is minimized. As a result, a car body can be tilted up to an necessary angle in order to improve the riding comfort. In addition thereto, air springs can be provided above the tilt mechanism, and the riding comfort is further improved thereby. The pantograph support apparatus according to the present invention does not obstacle the passenger space.

Since the mechanism of the pantograph support apparatus, consists of a slideable pantograph support and cables connecting the pantographs and the bogie frame, is mechanically very simple and light in weight, the mechanism of the pantograph support apparatus is less likely to fail in comparison to the pantograph support apparatuses of the prior art, and the pantograph support apparatus is therefore highly reliable.

## Claims

1. A pantograph unmovable with respect to bogie frame for a rolling stock, comprising:
a pantograph unit (11) supported by a rolling stock and movable with respect to said rolling stock in a plane perpendicular to the axis of motion of the rolling stock;
moving means for moving the pantograph unit (11) relative to a car body (1) comprising at least two elongated connecting means (3) extending on both sides of the car body (1), each elongated connecting means (3) having one end fixed on the bogie frame; and
winding means (5) for winding the elongated connecting means (3), provided at the pantograph support frame (8), said winding means (5) having each of the other ends of the elongated connecting means (3) fixed thereon, and said winding means (5) being rotatable so as to adjust the elongated connecting means (3) in reciprocating fashion;
characterized in that
a tension means (6) is provided at said winding means (5) to provide tension for turning the winding means (5).

2. A pantograph according to claim 1, wherein said tension means (6) is a spring having one end fixed to the pantograph support frame (8) and the other end fixed to the winding means (5).

3. A pantograph according to claim 1, wherein said tension means (6) is an elastic material having one end fixed to the pantograph support frame (8) and the other end fixed to the winding means (5).

4. A pantograph according to any one of claims 1 through 3, wherein said moving means comprise a guide means for guiding movement of the pantograph support frame (8) so as to move the pantograph support frame (8) perpendicularly to the longitudinal axis of motion of the rolling stock.

5. A pantograph according to claim 4 , wherein the guide means comprise slide bearing channels (10) which are provided on a roof of the body (1), and slide bearing blocks (9) which are carried by the pantograph support frame (8) for sliding along each of the slide bearing guide channels (10).

6. A pantograph according to claim 5, wherein the longitudinal cross sections of the slide bearing guide channels (10) are partial arcs of a circle in a plane perpendicular to the longitudinal axis of the rolling stock and having a center coincident with the center of rotation (12) of the tilting car body (1).

7. A pantograph according to claim 1 , wherein the elongated connecting means are cables.

8. A pantograph according to claim 1 , wherein the elongated connecting means are chains.

9. A pantograph according to claim 1, wherein the moving means comprise guide means (4) to guide the elongated connecting means.

10. A pantograph according to claim 9, wherein the guide means (4) are pulleys or a guide casing.

11. A pantograph according to claim 9, wherein the guide means (4) are gears.

## Patentansprüche

1. Scherenstromabnehmer für rollendes Material, welcher bezüglich eines Fahrgestellrahmens unbeweglich ist, umfassend:
eine Scherenstromabnehmereinheit (11), die von rollendem Material gehalten ist und bezüglich des rollenden Materials in einer Ebene senkrecht zu der Bewegungsachse des rollendes Materials beweglich ist;
eine Bewegungseinrichtung zum Bewegen der Scherenstromabnehmereinheit (11) relativ zu einem Wagenkörper (1), umfassend wenigstens zwei längliche Verbindungsmittel (3), die sich an beiden Seiten des Wagenkörpers (1) erstrecken, wobei jedes längliche Verbindungsmittel (3) ein an dem Fahrgestellrahmen befestigtes Ende aufweist; und
eine Wickeleinrichtung (5) zum Wickeln der länglichen Verbindungsmittel (3), die an dem Scherenstromabnehmerhalterahmen (8) vorgesehen ist, wobei jedes der anderen Enden der länglichen Verbindungsmittel (3) an der Wickeleinrichtung (5) fixiert ist, und wobei die Wickeleinrichtung (5) drehbar ist, um die länglichen Verbindungsmittel (3) in hin- und hergehender Art und Weise einzustellen,
dadurch gekennzeichnet, daß
eine Spanneinrichtung (6) an der Wickeleinrichtung (5) vorgesehen ist, um zum Drehen der Wickeleinrichtung (5) eine Spannung bereitzustellen.

2. Scherenstromabnehmer nach Anspruch 1, bei welchem die Spanneinrichtung (6) eine Feder ist, deren eines Ende an dem Scherenstromabnehmerhalterahmen (8) und deren anderes Ende an der Wickeleinrichtung (5) fixiert ist.

3. Scherenstromabnehmer nach Anspruch 1, bei welchem die Spanneinrichtung (6) ein elastisches Material ist, dessen eines Ende an dem Scherenstromabnehmerhalterahmen (8) und dessen anderes Ende an der Wickeleinrichtung (5) fixiert ist.

4. Scherenstromabnehmer nach einem der Ansprüche 1 bis 3, bei welchem die Bewegungseinrichtung ein Führungsmittel zum Führen einer Bewegung des Scherenstromabnehmerhalterahmens (8) umfaßt, um den Scherenstromabnehmerhalterahmen (8) orthogonal zu der Längsachse der Bewegung des rollenden Materials zu bewegen.

5. Scherenstromabnehmer nach Anspruch 4, bei welchem das Führungsmittel Gleitlagerkanäle (10) umfaßt, die an einem Dach des Körpers (1) vorgesehen sind, sowie Gleitlagerblöcke (9), die von dem Scherenstromabnehmerhalterahmen (8) zum Gleiten entlang jeder der Gleitlagerführungskanäle (10) getragen sind.

6. Scherenstromabnehmer nach Anspruch 5, bei welchem die Längsquerschnitte der Gleitlagerführungskanäle (10) in einer Ebene orthogonal zu der Längsachse des rollenden Materials Teilkreisbögen sind und eine mit der Drehachse (12) des sich neigenden Wagenkörpers (1) zusammenfallende Achse aufweisen.

7. Scherenstromabnehmer nach Anspruch 1, bei welchem die länglichen Verbindungsmittel Kabel sind.

8. Scherenstromabnehmer nach Anspruch 1, bei welchem die länglichen Verbindungsmittel Ketten sind.

9. Scherenstromabnehmer nach Anspruch 1, bei welchem die Bewegungseinrichtung Führungsmittel (4) umfaßt, um die länglichen Verbindungsmittel zu führen.

10. Scherenstromabnehmer nach Anspruch 9, bei welchem die Führungsmittel (4) Rollen oder ein Führungsgehäuse sind.

11. Scherenstromabnehmer nach Anspruch 9, bei welchem die Führungsmittel (4) Zahnräder sind.

## Revendications

1. Pantographe fixe par rapport à un châssis de bogie pour un matériel roulant, comprenant :
une unité de pantographe (11) supportée par un matériel roulant et déplaçable par rapport audit matériel roulant, dans un plan perpendiculaire à l'axe de déplacement du matériel roulant;
des moyens de déplacement pour déplacer l'unité de pantographe (11) par rapport à une caisse de voiture (1), comprenant au moins deux moyens allongés de liaison (3) s'étendant des deux côtés de la caisse de voiture (1), chacun des moyens allongés de liaison (3) possédant une extrémité fixée au châssis de bogie; et
des moyens d'enroulement (5) pour enrouler les moyens allongés de liaison (3), prévus sur le cadre (8) de support du pantographe, chacune des autres extrémités des moyens allongés de liaison (3) étant fixée auxdits moyens d'enroulement (5), et lesdits moyens d'enroulement (5) pouvant tourner de manière à ajuster les moyens allongés de liaison (3) selon un mode en va-et-vient;
caractérisé en ce que
des moyens de traction (6) sont prévus dans lesdits moyens d'enroulement (5) pour appliquer une traction pour faire tourner les moyens d'enroulement (5).

2. Pantographe selon la revendication 1, dans lequel lesdits moyens de traction (6) sont constitués par un ressort dont une extrémité est fixée au cadre (8) de support du pantographe et dont l'autre extrémité est fixée aux moyens d'enroulement (5).

3. Pantographe selon la revendication 1, dans lequel lesdits moyens de traction (6) sont réalisés en un matériau élastique dont une extrémité est fixée au cadre (8) de support du pantographe et dont l'autre extrémité est fixée aux moyens d'enroulement (5).

4. Pantographe selon l'une quelconque des revendications 1 à 3, dans lequel lesdits moyens de déplacement comprennent des moyens de guidage servant à guider le déplacement du cadre (8) de support du pantographe de manière à déplacer le cadre (8) de support du pantographe perpendiculairement à l'axe longitudinal de déplacement du matériel roulant.

5. Pantographe selon la revendication 4, dans lequel les moyens de guidage comprennent des profilés en U formant support à glissement (10) qui sont montés sur un toit de la caisse (1) et des blocs de support à glissement (9) qui sont portés par le cadre (8) de support du pantographe pour glisser le long de chacun des profilés en U de guidage formant support à glissement (10).

6. Pantographe selon la revendication 5, dans lequel les sections transversales longitudinales des profilés en U de guidage formant support à glissement (10) sont des éléments d'arcs de cercle dans un plan perpendiculaire à l'axe longitudinal du matériel roulant et possédant un centre qui coïncide avec le centre de rotation (12) de la caisse de voiture inclinée (1).

7. Pantographe selon la revendication 1, dans lequel les moyens allongés de liaison sont des câbles.

8. Pantographe selon la revendication 1, dans lequel les moyens allongés de liaison sont des chaînes.

9. Pantographe selon la revendication 1, dans lequel les moyens de déplacement comprennent des moyens de guidage (4) servant à guider les moyens allongés de liaison.

10. Pantographe selon la revendication 9, dans lequel les moyens de guidage (4) sont des poulies ou un logement de guidage.

11. Pantographe selon la revendication 9, dans lequel les moyens de guidage (4) sont des pignons.
